# EUROPEAN PATENT APPLICATION

(11) **EP 4 835 257 A1**
(43) Date of publication of application: **04.11.2026**
(21) Application number: 26174690.3
(22) Date of filing: 27.04.2026
(51) Int. Cl.: F01D 5/28, F01D 5/00, F01D 5/18

(54) **METHOD OF COATING A GAS TURBINE ENGINE COMPONENT**

(30) Priority: 29.04.2025 US 202519192494
(71) Applicant: General Electric Company, Cincinnati, Ohio 45215 (US)
(72) Inventor: PROCHASKA, Stephanie Orfali, Niskayuna, 12309 (US); VOZAR, Andrea Lena, Niskayuna, 12309 (US); SALES, Enes, Niskayuna, 12309 (US); CURTIS, Todd, Niskayuna, 12309 (US); MAGNANT, Jerome Geoffrey, Niskayuna, 12309 (US)
(74) Representative: Openshaw & Co.

(57) **Abstract**

A method (200) of coating a gas turbine engine component, comprising blocking (204) a plurality of openings (104) defined in a surface (106) of the gas turbine engine component (100) with a reusable filler material (112); applying (206) an anchoring source (114) to the reusable filler material to hold the reusable filler material in the plurality of openings; applying (208) a coating (116) to the surface of the gas turbine engine component; removing (216) the reusable filler material from the plurality of openings; and collecting (218) the reusable filler material.

## Description

### FIELD

The present subject matter relates generally to methods of coating components, such as gas turbine engine components, such that openings in the components do not become blocked by the coating.

### BACKGROUND

Components used in high-temperature, corrosive, or other harsh environments, such as gas turbine engines, typically have protective coatings applied to their surfaces. These components often have holes or openings that should not be covered or obstructed by the coating, which presents challenges during the initial application and subsequent repairs of the coating. Keeping these holes or openings clear during processing, or plugging and then re-opening these holes or openings after processing, can be difficult. For instance, the exact original location of holes or openings that are plugged during processing must be found to re-open the holes or openings later. Gas turbine engine components can have numerous holes or openings, such as cooling holes, defined in their outer surfaces. This can complicate the re-opening process and require a large amount of plug material.

### BRIEF DESCRIPTION OF THE DRAWINGS

A full and enabling disclosure, including the best mode thereof, directed to one of ordinary skill in the art, is set forth in the specification, which makes reference to the appended figures, in which:
FIG. 1A provides a schematic side view of a portion of a component having a plurality of openings defined in an outer surface of the component according to exemplary aspects of the present subject matter.
FIG. 1B provides a schematic cross-section view of a component.
FIG. 2 provides a flow diagram illustrating a method of coating a component according to exemplary aspects of the present subject matter.
FIG. 3 provides a schematic cross-section view of the component of FIG. 1B with an original coating on the outer surface.
FIG. 4A provides a schematic cross-section view of the component of FIG. 3 with the original coating removed and a reusable filler material disposed in the plurality of openings.
FIGS. 4B, 4C, 4D, 4E, and 4F provide schematic cross-section views of a portion of the component of FIG. 3 with the original coating removed and various embodiments of reusable filler materials and anchoring sources.
FIG. 5A provides a schematic cross-section view of a portion of the component of FIG. 3 with the original coating removed and a magnetic rod reusable filler material disposed in an opening of the plurality of openings and a magnet anchoring source used to tip up the magnetic rod in the opening.
FIG. 5B provides a schematic cross-section view of a portion of the component of FIG. 3 with the original coating removed and a magnetic rod reusable filler material disposed in an opening of the plurality of openings and a magnet anchoring source used to lay the magnetic rod against the component.
FIG. 6 provides a schematic cross-section view of the component of FIG. 4A with the reusable filler material disposed in the plurality of openings during a coating process.
FIG. 7 provides a schematic cross-section view of the coated component of FIG. 6 during a heat treatment process.
FIG. 8 provides a schematic cross-section view of the coated component during removal and collection of the reusable filler material for use in a second component.
FIG. 9 provides a schematic cross-section view of a second component having a plurality of openings defined in an outer surface thereof, with the reusable filler material disposed in the plurality of openings.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a," "an," and "the" include plural references unless the context clearly dictates otherwise.

The term "at least one of" in the context of, e.g., "at least one of A, B, and C" refers to only A, only B, only C, or any combination of A, B, and C.

As used herein, the terms "first," "second," "third," and other ordinals are used to distinguish one component from another and are not intended to signify location or importance of the individual components.

The terms "coupled," "fixed," "attached to," and the like refer to both direct coupling, fixing, or attaching, as well as indirect coupling, fixing, or attaching through one or more intermediate components or features, unless otherwise specified herein.

The terms "redefine," "redefining," and the like refer to removing material from a component to define a hole, aperture, or other opening in the component, such as through machining (e.g., drilling, electric discharge machining, etc.) or other means for material removal.

Approximating language, as used herein throughout the specification and claims, is applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value, or the precision of the methods or machines for constructing or manufacturing the components and/or systems. The approximating language may refer to being within a +/- 1, 2, 4, 10, 15, or 20 percent margin in either individual values, range(s) of values, and/or endpoints defining range(s) of values.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Generally, the present subject matter provides methods for coating a surface of a component without obstructing, with the coating, one or more openings defined in the surface. More specifically, the inventors of the present disclosure sought out ways to impede an ingress of a coating into one or more openings, such as cooling holes or other passages defined in a surface of a gas turbine component, that are simple and cost-effective. For example, aeroengine components such as blades or nozzles often contain hundreds of cooling holes, which must remain open and their geometry maintained to function as designed. Coating or recoating such components can be a challenging task because the process needs to either prevent the coating from infiltrating the large number of cooling holes or include re-opening the cooling holes. For instance, re-opening or redefining cooling holes can require an intricate drill and/or laser alignment with the existing cooling holes, and/or the sheer number of cooling holes on a single component can pose challenges in terms of time, equipment, etc. to re-open or redefine such openings after a repair or coating. Further, plugging the large number of cooling holes with a plug or other material that is used only once with a single component (e.g., a single use plug or a single use filler material) can be time consuming and expensive.

The inventors of the present disclosure recognized that blocking openings defined in a surface of a component with a reusable material avoids the intricacies of re-defining or re-opening such openings and reduces the costs associated with preventing the coating from entering the openings. The inventors discovered methods of blocking a plurality of openings in a component that are simple to execute and utilize reusable materials, which provide savings in time and cost.

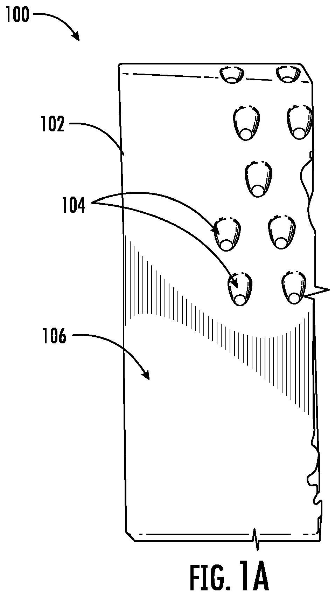

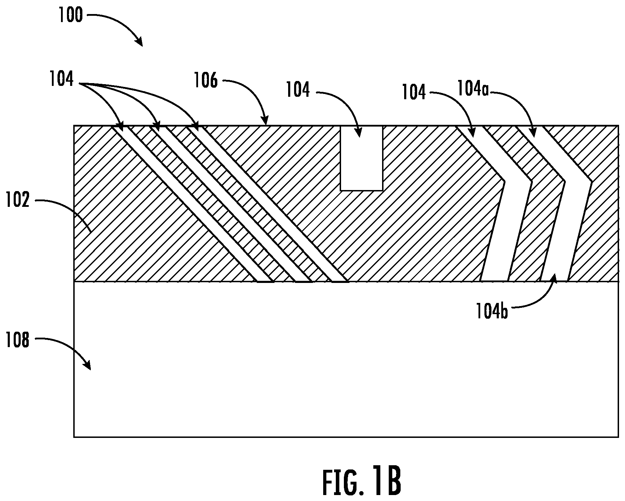

Referring now to the drawings, wherein identical numerals indicate the same elements throughout the figures, FIG. 1A is a schematic view of a portion of a component 100, and FIG. 1B is a schematic cross-section view of the component 100. The component 100 may be an airfoil of a gas turbine engine (e.g., a turbofan jet engine) such as a turbine stator nozzle airfoil. In other embodiments, the component 100 may be another airfoil, such as an inlet guide vane (IGV), an outlet guide vane (OGV), a rotor blade, etc., or another gas turbine engine component, such as a combustor liner, a fan case, a shroud, a turbine nozzle inner band or outer band, a frame (e.g., a turbine center frame or the like), etc. In still other embodiments, the component 100 may be a component of an assembly other than a gas turbine engine.

The component 100 may be formed from any suitable material. For example, gas turbine engine components are typically formed from metallic materials, such as superalloys, or composite materials, such as ceramic matrix composites (CMCs) or polymer matrix composites (PMCs). In various embodiments, the component 100 is formed from a metallic material or a composite material.

As shown in FIG. 1A, the component 100 includes a body 102 and a plurality of openings 104 defined in an outer body surface 106 of the body 102. The plurality of openings 104 may be cooling holes, channels, cavities, openings for instrumentation such as one or more sensors, openings for attachment features, or other such openings or apertures, or any combination of openings. For instance, a first portion of the plurality of openings 104 may be cooling holes, a second portion of the plurality of openings 104 may be openings for instrumentation (e.g., access ports), and a third portion of the plurality of openings 104 may be openings for attachment features.

Referring to FIG. 1B, in some embodiments, at least a portion of the plurality of openings 104 extend from the outer body surface 106 to an internal cavity 108. For example, at least a portion of the plurality of openings 104 may be defined in the component 100 as cooling holes that allow a cooling fluid to flow between an internal cavity 108 defined within the body 102 and the outer body surface 106 (or a coating applied over the outer body surface 106 as described below) to cool the component 100, e.g., as the cooling fluid flows through the component 100 and/or as the cooling fluid flows over the outermost surface of the component 100 (e.g., the outer body surface 106 or a surface defined by a coating applied over the outer body surface 106). However, it will be appreciated that one or more of the openings 104 need not go all the way through the body 102, e.g., from the outer body surface 106 to the internal cavity 108. That is, as shown in FIG. 1B, some openings 104 of the plurality of openings 104 may be through holes defined through the component 100 to the internal cavity 108, and other openings 104 may be blind holes that do not reach the internal cavity 108.

Keeping with FIG. 1B, one or more openings 104 of the plurality of openings 104 may be defined at a substantially orthogonal angle with respect to the outer body surface 106, e.g., an opening length of the opening(s) 104 may extend at a substantially orthogonal angle with respect to the outer body surface 106. Additionally, or alternatively, one or more of the openings 104 may have an opening length extending at one or more non-zero and non-orthogonal angles, respectively, to the outer body surface 106. For example, as shown in FIG. 1B, the two openings 104 defined on the right side of the component 100 are non-line of sight openings 104, which comprise a change in direction from a first end 104a at the outer body surface 106 to a second end 104b at the internal cavity 108 such that the respective second end 104b of a respective opening 104 at the internal cavity 108 is not along a line of sight to the first end 104a of the respective opening 104 at the outer body surface 106.

Additionally, or alternatively, one or more of the openings 104 may have a non-constant cross-sectional area and/or one or more of the openings 104 may have a non-round cross-sectional shape. For instance, one or more openings 104 of the plurality of openings 104 that are defined from the outer body surface 106 to the internal cavity 108 may taper from a larger cross-sectional area at the surface 106 to a smaller cross-sectional area at the internal cavity 108. In such embodiments, the openings 104 defined through the body 102 of the component 100 to the internal cavity 108 have a larger width at the outer body surface 106 than at the internal cavity 108. In other embodiments, one or more openings 104 have a larger width at the internal cavity 108 than at the outer body surface 106. Further, the plurality of openings 104 may have one or more suitable cross-sectional shapes, such as a round or circular cross-section, a square cross-section, a rectangular cross-section, a hexagonal cross-section, etc.

During initial fabrication of the component 100, a coating may be applied over the outer body surface 106. In at least some embodiments, the plurality of openings 104 are defined through such initial or original coating, such that the coating does not penetrate or infiltrate the openings 104. Over time, e.g., after a certain period of use or after an event in which the component 100 (or another component of an assembly in which the component 100 is disposed) is damaged, the initial or original coating may need to be replaced. For instance, the initial or original coating may sustain chipping, cracking, abrasion, erosion, recession, or other degradation that could hinder the performance or usefulness of the initial or original coating and/or the component 100. In such embodiments, the initial or original coating may be reapplied to the component 100 in which the plurality of openings 104 are defined. In other embodiments, rather than defining the plurality of openings 104 through the original coating, the original coating can be applied to the component 100 in which the plurality of openings 104 are already defined. In either event, it can be undesirable for the coating to penetrate or infiltrate the plurality of openings 104, e.g., such that the plurality of openings 104 can function as intended (as cooling holes, receptacles for sensors, etc.).

The coating can be one or more of a number of coatings, such as a thermal barrier coating (TBC) or an environmental barrier coating (EBC) that can help protect the body 102 of the component 100 from the harsh environment of, e.g., high temperature gas turbine engine sections. For example, EBCs can provide a seal against the corrosive gases in the hot combustion environment of a gas turbine engine, which can oxidize silicon-containing ceramic matrix composites (CMCs) and monolithic ceramics, and EBCs can help prevent dimensional changes in a CMC component due to oxidation and volatilization of silicon oxide in high temperature steam, where silicon oxide can be converted to volatile (gaseous) silicon hydroxide species. EBCs can also benefit components made from other materials, such as superalloys or the like. Thus, when the EBC sustains chipping, cracking, abrasion, erosion, recession, etc., the EBC may need to be removed and reapplied to continue realizing the benefits of the EBC. The coating can be any one of a number of other protective coatings and may be applied using any suitable process, such as a line of sight deposition process. Line of sight deposition processes coat only surfaces that are directly visible from the source, with atoms or molecules moving straight from the origin to the target with little scattering or deflection. Examples of line of sight processes include thermal spray processes, room temperature spray processes, physical vapor deposition (PVD) processes, or sputtering. Exemplary thermal spray processes include, but are not limited to, air plasma spray (APS), very low-pressure plasma spraying (VLPPS), suspension plasma spraying (SPS), high velocity oxygen fuel (HVOF), solution precursor plasma spray (SPPS), and high velocity air fuel (HVAF). Exemplary physical vapor deposition processes include, but are not limited to, electron beam physical vapor deposition (EBPVD) and plasma spray physical vapor deposition (PSPVD). Exemplary sputtering techniques include, but are not limited to, magnetron sputtering, radio frequency (RF) sputtering, diode sputtering, and reactive sputtering. Other deposition processes, such as slurry-based processes or chemical vapor deposition (CVD) processes, may also be used to apply the coating.

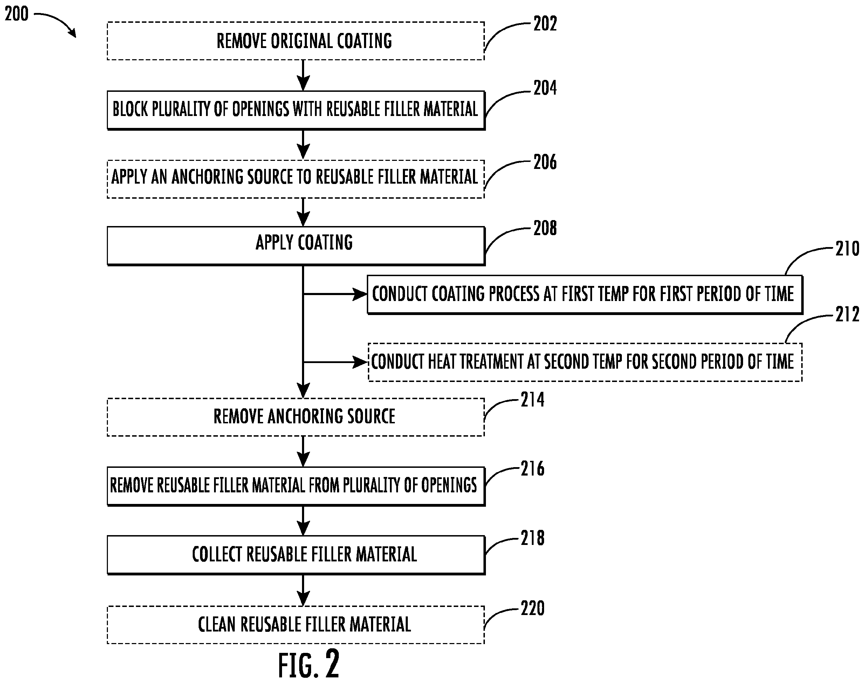

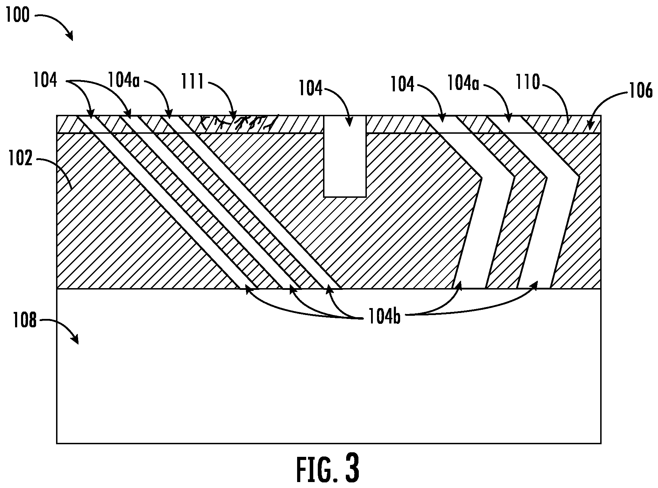

Referring now to FIG. 2, a flow diagram of a method 200 in accordance with an exemplary aspect of the present disclosure is provided. The method 200 of FIG. 2 may be utilized to coat and/or recoat a component, such as a gas turbine engine component, as described above with reference to FIGS. 1A and 1B. Further, FIGS. 3-9 are provided to illustrate in turn portions of the method 200. Accordingly, it will be appreciated that the method 200 may generally be utilized to coat and/or recoat a component as described herein. However, in other exemplary aspects, the method 200 may additionally or alternatively be utilized to coat any other suitable component. In addition, although FIG. 2 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present subject matter.

As depicted, the method 200 optionally includes at block (202) removing an original coating. For example, as described above and as shown in FIG. 3, in some embodiments, an original coating 110 is applied to the component 100 prior to defining the plurality of openings 104 in the body 102 of the component 100. For instance, the original coating 110 is applied over the outer body surface 106 of the body 102, and then the plurality of openings 104 are defined through the original coating 110 and the outer body surface 106 into the body 102; at least some openings 104 may extend to an internal cavity 108 of the component 100 as described above with respect to FIG. 1B.

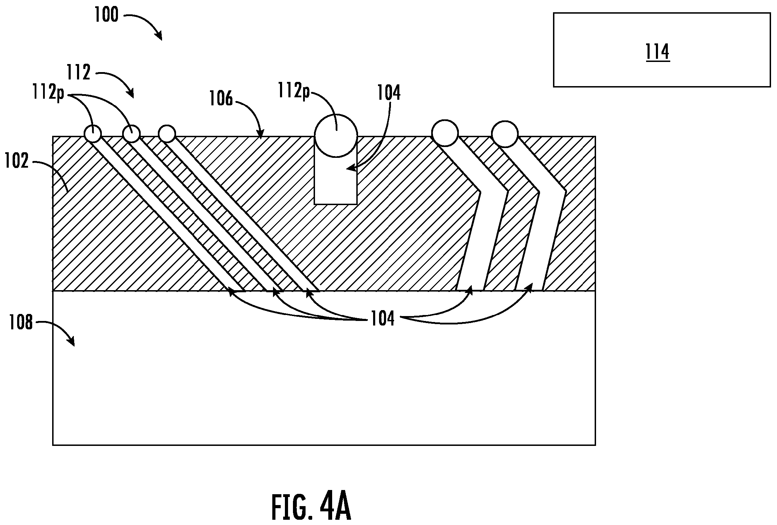

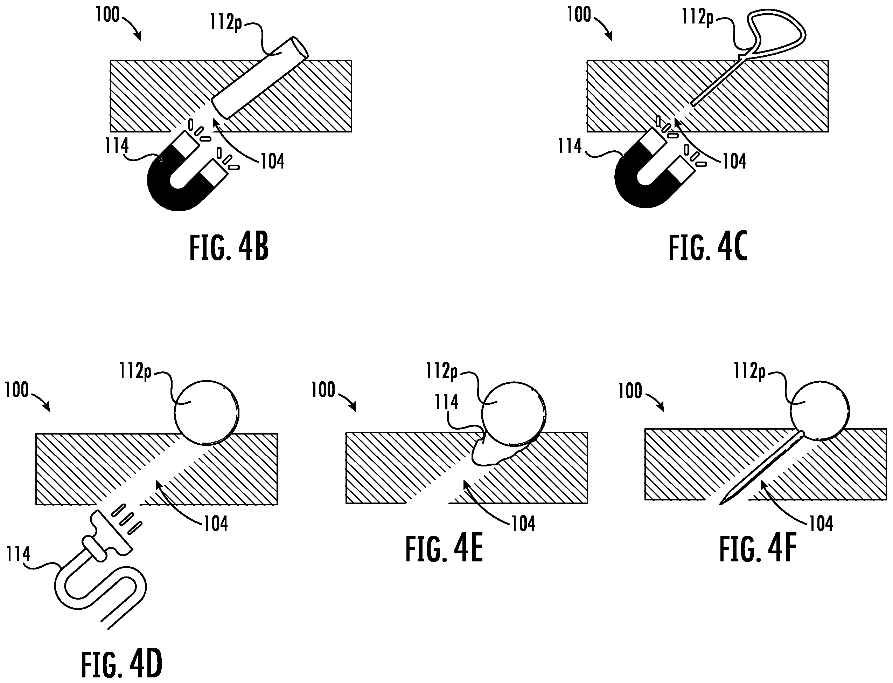

As previously described, the original coating 110 can become degraded, e.g., the original coating 110 can sustain chipping, cracking, abrasion, erosion, recession, or other degradation such that the performance or benefits of the original coating 110 are diminished or non-existent and/or the performance of the component 100 is diminished. A degraded area 111 is indicated in FIG. 3. To restore the benefits provided by the coating, it is removed and replaced as described herein. In some embodiments, the initial or original coating 110 may be stripped from the component 100 by any suitable chemical or physical process, such as milling or the like. Referring to FIG. 4A, removing the initial or original coating 110 from the component 100 exposes the outer body surface 106 of the component 100.

Thus, as shown at block (202) in FIG. 2, the original coating 110 can be removed in preparation for applying a new coating. However, the new coating cannot block or impede the plurality of openings 104, which could harm or hinder the performance of the component 100, e.g., by limiting or preventing cooling flow through the plurality of openings 104, etc. Therefore, the plurality of openings 104 may be blocked with a filler during coating then re-opened after the new coating is applied to prevent the new coating from obstructing the openings 104.

Removing the coating as shown at block (202) is optional and may be omitted during formation of a new or original component, or when a coating is applied to a component without a coating. That is, an initial or original coating may not need to be removed during the method 200 to prevent obstruction of openings in a component with a coating. Stated differently, the openings may be defined in the component before any coating is applied, then blocked and re-opened (i.e., the blockage is removed after coating) as described herein to ensure the openings are open after the coating is applied.

Referring to FIG. 2, at block (204), the method 200 includes blocking a plurality of openings defined in a surface of a component with a reusable filler material. As shown schematically in FIGS. 4A-4F, a reusable filler material 112 is used to block the plurality of openings 104 defined in the outer body surface 106 of the component 100. At the least, the reusable filler material 112 is a durable mask for the plurality of openings 104 that is removed in a non-destructive manner, but the reusable filler material 112 can be formed from a number of different materials as described in greater detail below. In at least some embodiments, the reusable filler material 112 can be reused after a coating process without more than cleaning the reusable filler material 112 between a coating process and reuse of the reusable filler material 112, e.g., in a subsequent coating process. That is, in at least some embodiments, the reusable filler material 112 can be reused without reshaping, reforming, etc., other than removing coating material or an adhesive anchoring material such as by cleaning the reusable filler material 112.

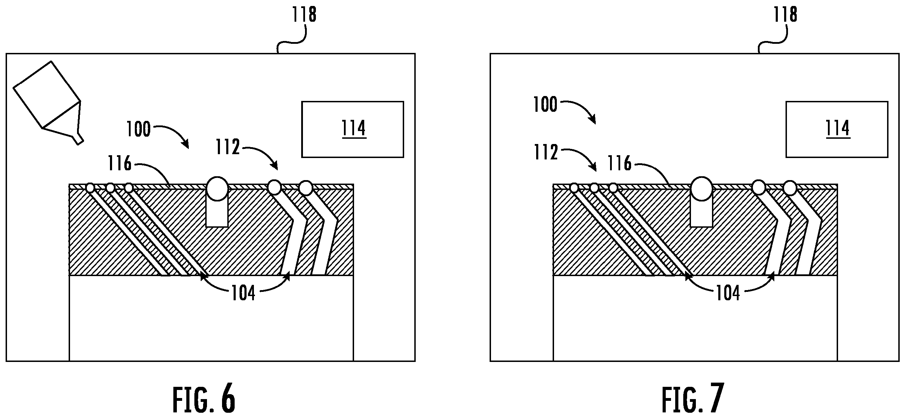

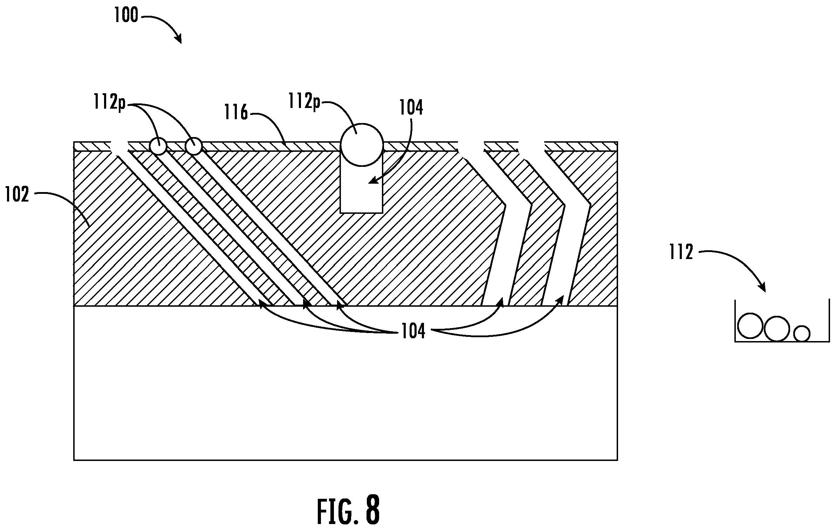

In some embodiments, the reusable filler material 112 is a plurality of pieces 112p of reusable filler, with one or more pieces 112p blocking each opening 104 of the plurality of openings 104. Further, in some embodiments, such as shown in FIG. 4A, the reusable filler material 112 extends beyond the plurality of openings 104 and the outer body surface 106 of the component 100 such that, after application, the coating 116 (FIGS. 6, 7, 8) is discontinuous at the plurality of openings 104, as shown in FIG. 8. Such discontinuity reduces or eliminates the need to remove coating from over or around the filler material 112 and/or the openings 104 at the outer body surface 106.

The reusable filler material 112 can be formed from a variety of materials and/or have a variety of shapes. In some embodiments, the reusable filler material 112 is press fit or otherwise seated in the openings 104 to hold the reusable filler material 112 in place. In other embodiments, an anchoring source 114 is used to anchor or hold the reusable filler material 112 in place. As such, the method 200 optionally includes at block (206) applying an anchoring source to the reusable filler material to hold the reusable filler material in the plurality of openings. For example, in some embodiments, the reusable filler material 112 is formed from a magnetic material, such as a ferromagnetic material, and the anchoring source 114 is a magnet, such as shown in FIGS. 4B and 4C. In another embodiment, such as shown in FIG. 4D, the anchoring source 114 is a vacuum suction device for applying suction through the end of the opening opposite the filler material 112 and the coating. In yet another embodiment, such as shown in FIG. 4E, the anchoring source 114 is an adhesive material. In some embodiments, the adhesive material is a moldable clay material, such as a polymer clay or another similar moldable material, and in other embodiments, the adhesive material is a polymer resin, such as an organic polymer, an inorganic polymer such as a geopolymer, sodium silicate, aluminum phosphate, a preceramic polymer, a phenolic resin, or a furan or furfuryl alcohol resin. In embodiments in which the anchoring source 114 is an adhesive such as a moldable clay material, a polymer resin, a putty, or the like, blocking the plurality of openings 104 can include applying adhesive material to each of the plurality of openings 104 and pressing the reusable filler material 112 into the adhesive material. Alternatively, a piece 112p of the reusable filler material 112 can be pressed into a piece of the adhesive material, which in turn is pressed into or applied to a respective opening 104 of the plurality of openings 104.

Further, in some embodiments, the reusable filler material 112 may be formed from a material that is relatively lightweight for application of a desired anchoring source 114. For example, where the anchoring source 114 is a vacuum suction device, the reusable filler material 112 may be formed from a relatively lightweight material, such as a polymer, to facilitate holding the reusable filler material 112 in place with the vacuum suction anchoring source 114 (e.g., without requiring an unduly strong vacuum suction).

As such, it will be appreciated that the reusable filler material 112 is formed from a suitable material and/or has a suitable shape for holding the reusable filler material 112 in place in the plurality of openings 104 with the anchoring source 114. The shape of the reusable filler material 112 can also simplify placement of the reusable filler material 112 in each of the plurality of openings 104. In some embodiments, blocking the plurality of openings with the reusable filler material as shown at block (204) of the method 200 includes agitating at least one of the components or the reusable filler material to self-assemble the reusable filler material in the plurality of openings.

More particularly, the reusable filler material can be a plurality of pieces, and blocking the plurality of openings includes disposing the plurality of pieces with the component and agitating at least one of the plurality of pieces or the component such that the plurality of pieces self-assemble in the plurality of openings to block the plurality of openings with the reusable filler material. For example, the reusable filler material 112 can be a plurality of pieces 112p that each have a spherical shape, i.e., each piece 112p of the plurality of pieces 112p of the reusable filler material is a ball or a spherical bead. In some embodiments, the plurality of spherical pieces 112p are disposed in a container with the component 100, and the container is agitated, e.g., shaken or moved side-to-side and/or up-and-down, to agitate the plurality of pieces 112p and the component 100, thereby rolling the plurality of pieces 112p into the plurality of openings 104 defined in the component 100. The container can be agitated until each opening 104 has at least one piece 112p of the reusable filler material disposed therein. Once rolled into place, the reusable filler material 112 (i.e., the plurality of spherical pieces 112p) blocks the plurality of openings 104, with at least one piece of the reusable filler material 112 positioned in each opening 104 of the plurality of openings 104.

The reusable filler material 112 could self-assemble in the plurality of openings 104 in other ways as well. For instance, applying a magnet anchoring source 114 to a magnetic reusable filler material 112 may induce the pieces of the reusable filler material 112 to self-assemble into the plurality of openings 104 defined in the component 100. As another example, a vacuum suction anchoring source 114 could induce pieces of the reusable filler material 112 to move into the plurality of openings 104 and thereby self-assemble into the openings 104.

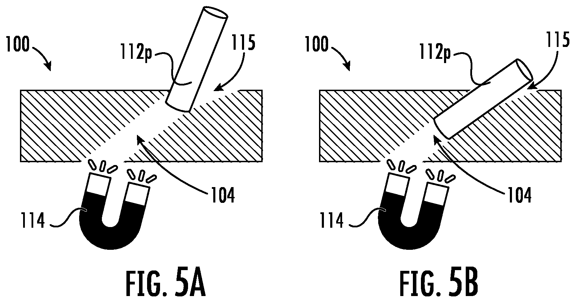

Further, the anchoring source 114 can be manipulated to affect the orientation of the reusable filler material 112 within the plurality of openings 104. In some embodiments, an anchoring source 114 that is a magnet can be oriented or otherwise manipulated to orient a magnetic reusable filler material 112 in a desired orientation with respect to the plurality of openings 104. For example, the reusable filler material 112 may be a plurality of magnetic rods and the plurality of openings 104 may be a plurality of cooling holes, and the magnet anchoring source 114 may positioned adjacent the component 100 to orient the plurality of magnetic rods, e.g., to cover the entire throat area of a plurality of cooling holes or to cover less than the entire throat area of the plurality of cooling holes. More particularly, referring to FIGS. 1A, 5A, and 5B, in some embodiments, one or more of the plurality of openings 104, such as cooling holes, may have a throat area 115 at the outer body surface 106 of the component 100 that is wider than the remainder of the cooling hole extending into the body 102 of the component 100. As shown in FIG. 5A, the magnet anchoring source 114 may be used, e.g., to tip up the reusable filler material 112 that is a plurality of magnetic rods such that the reusable filler material 112 covers the width of the cooling holes extending into the body 102 (and not all of the enlarged throat area 115). Alternatively, as shown in FIG. 5B, the magnet anchoring source 114 may be used to lay the plurality of magnetic rods against the component 100 such that the reusable filler material 112 covers all or a substantial portion of the enlarged throat area 115 (and also extends into the cooling holes to prevent ingress of the coating therein).

The reusable filler material 112 can also have other shapes. In some embodiments, as described above, at least one piece 112p of the plurality of pieces 112p of the reusable filler material 112 has a spherical shape or is a ball or spherical bead, and in other embodiments, at least one piece 112p of the plurality of pieces of the reusable filler material 112 is an elongated wire. For example, a piece 112p of the reusable filler material 112 having an elongated wire shape can be a cylinder having a length that is several times larger than its diameter such that it is a relatively thin cylinder and, thus, shaped like a wire. Such wire-shaped reusable filler material 112 may be suitable for smaller openings 104, e.g., for openings 104 having a relatively small diameter or cross-sectional area. Each piece 112p of the reusable filler material 112 shaped as an elongated wire can extend into the respective opening 104 of the plurality of openings 104 in the component 100 into which the wire-shaped piece 112p is disposed, e.g., each wire-shaped piece 112p can extend from the outer body surface 106 toward the internal cavity 108.

In some embodiments, one or more pieces 112p of the reusable filler material 112 have a rod shape, e.g., a cylindrical shape that generally is wider or has a larger diameter than a wire. The larger rod-shaped reusable filler material 112 can, e.g., be used in larger diameter openings 104 or openings having a larger cross-sectional area than openings 104 in which a wire-shaped reusable filler material 112. That is, the size and/or shape of one or more pieces 112p of the reusable filler material 112 may be selected based on the size and/or shape of respective openings 104 in the component 100, e.g., to more effectively block each respective opening 104.

Further, in some embodiments, the wire or rod-shaped pieces 112p of the reusable filler material 112 can have shaped heads. That is, one end of a wire or rod-shaped piece 112p can have a shape such as a ball, a teardrop, a cone, or the like, which can anchor the piece 112p in a respective opening 104. For example, as shown in FIG. 4C, a wire-shaped piece 112p can be bent, wound, or otherwise gathered at one end to have a generally teardrop-shaped head. The shaped head of a respective piece 112p of the reusable filler material 112 can self-anchor the piece 112p in a respective opening 104 and/or can work together with an external anchoring source 114 to anchor the piece 112p in the respective opening 104; the shaped head can also help block the respective opening 104 against the ingress of coating material.

In still other embodiments, at least one piece 112p of the plurality of pieces 112p of the reusable filler material 112 has a shape complementary to a shape of at least one opening 104 of the plurality of openings 104. As described above with respect to FIG. 1B, each opening 104 can have the same shape, or one or more openings 104 can have different shapes from the remainder of the openings 104. For example, some openings 104 can extend in a generally linear fashion with a constant cross-sectional shape, but other openings 104 can have a change in direction along their length and/or have a change in cross-sectional shape and/or width. In some embodiments, at least one piece 112p of the reusable filler material 112 is three-dimensional (3D) printed to have a shape complementary to a shape of at least one of the plurality of openings 104. By 3D printing the piece(s) 112p of the reusable filler material 112, the reusable filler material 112 can conform to the opening 104 no matter the shape, size, etc. of the opening 104 at all locations along the length of the opening 104. That is, the pieces 112p of the reusable filler material 112 can be tailored to the shape and/or size of the plurality of openings 104, which can help the reusable filler material 112 block the openings 104 to prevent the ingress of coating into the openings 104.

In other embodiments, the pieces 112p of the reusable filler material 112 may be 3D printed to have particular shapes, not necessarily conforming to the shape of an individual opening 104. For instance, one or more pieces 112p of the reusable filler material 112 may be 3D printed to have an internal portion that extends into an opening 104 and an external portion that covers the opening 104 at the external body surface 106 of the component 100. In at least some embodiments, the external portion of such pieces 112p of the reusable filler material 112 may be wider than or have a larger diameter than the internal portion of such pieces 112p.

In some embodiments, the anchoring source 114 may be applied before the reusable filler material 112 is introduced to block the plurality of openings 104. More specifically, in method 200, blocks (206) applying the anchoring source and (204) blocking the plurality of openings may be reversed. As one example, the anchoring source 114 is an adhesive material, such as a moldable polymer clay, and the reusable filler material 112 is a plurality of spherical polymer beads. The adhesive material is applied to the component 100 prior to dispersion of the reusable filler material 112 such that, upon dispersion, the spherical polymer beads that are the pieces 112p of the reusable filler material 112 lodge into the adhesive material at the plurality of openings 104; the adhesive material acts as an anchor to hold the spherical polymer beads in place within the openings 104. In other embodiments, the reusable filler material 112 may be dispersed or placed in the anchoring source 114, e.g., as illustrated in FIG. 4E, individual pieces 112p of the reusable filler material 112 may be lodged into individual pieces of an adhesive anchoring source 114, and then the pieces of the anchoring source 114 with the reusable filler material 112 lodged therein can be applied to the component 100 such that the reusable filler material 112 blocks the plurality of openings 104. It will be understood that the materials of the adhesive anchoring source 114 and the reusable filler material 112 (i.e., the moldable polymer clay and the spherical polymer beads, respectively, of this example) are by way of example only, and other suitable materials and/or shapes of the reusable filler material 112 may be used as well.

Moreover, the anchoring source 114 may be a combination of two or more anchoring sources such as those described herein. As an example, the anchoring source 114 can include a magnet and a vacuum suction device that are applied together to anchor the reusable filler material 112 in the plurality of openings 104. Further, the applied anchoring source 114 and the shape of the pieces 112p of the reusable filler material 112 can concurrently hold the reusable filler material 112 in place in the plurality of openings 104. For instance, as described above, the pieces 112p of the reusable filler material 112 may be shaped as elongated wires with ball shaped heads and may be formed from a magnetic material such that, when a magnetic anchoring source 114 is applied, the magnetic anchoring source 114 as well as the ball shaped heads of the pieces 112p both help anchor the reusable filler material 112 in the plurality of openings 104. As shown, e.g., in FIGS. 4B and 4C, the magnetic anchoring source 114 may be applied from a direction (e.g., from an opposite surface of the component) to attract a magnetic portion of the reusable filler material 112, such as a ferromagnetic elongated wire or pin body, into the opening 104, and a ball shaped head attached to the elongated wire or pin body can have a suitable diameter to stop the reusable filler material 112 from traveling too far into the opening 104 to effectively block the opening 104 from an ingress of coating material. Moreover, as further described above, the heads of elongated wire pieces 112p of the reusable filler material 112 may have other shapes as well, such as a conical shape, a teardrop shape, etc.

Turning back to FIG. 2, the method 200 includes at block (208) applying a coating to the surface of the component. In some embodiments, the coating is applied at room temperature, but in other embodiments, applying the coating to the surface of the component comprises subjecting the component and the reusable filler material to an elevated temperature, such as a temperature of at least about 50°C, at least about 100°C, at least about 300°C, at least about 350°C, at least about 500°C, at least about 750°C, at least about 1000°C, or more. In some embodiments, the coating may be a thermal barrier coating (TBC) or an environmental barrier coating (EBC) of a turbine engine component. In some embodiments, as shown in FIG. 2, applying the coating includes block (210), conducting a coating process at a first temperature and, optionally, block (212), conducting a heat treatment process at a second temperature. As described above, the coating process may be a line of sight deposition process, such as a thermal spray process, a physical vapor deposition (PVD) process, or a sputtering technique, or another suitable process, such as a slurry-based process or a chemical vapor deposition (CVD) process. In at least some embodiments, the second temperature is greater than the first temperature. For instance, the second temperature is at least about 300°C, such that the first temperature is less than about 300°C. In various embodiments, the second temperature, or heat treatment temperature, may be at least about 300°C, at least about 500°C, at least about 750°C, at least about 1000°C, at least about 1200°C, at least about 1500°C, at least about 1800°C, at least about 2000°C, or more. However, as stated, block (212) is optional, and in some embodiments, the method 200 includes block (210) conducting the coating process without then conducting a heat treatment process, i.e., block (212) is omitted in such embodiments.

FIGS. 6 and 7 schematically depict conducting a coating process and conducting a heat treatment process as described herein. FIG. 6 illustrates coating the component 100 with the coating 116, while the reusable filler material 112 is anchored in the plurality of openings 104 with the anchoring source 114, thereby blocking the coating 116 from entering the plurality of openings 104. FIG. 7 illustrates heat treating the component 100 having the coating 116 applied thereto. As shown in FIGS. 6 and 7, the coating process and the heat treatment process may be conducted in a chamber 118 or the like, e.g., to control the environment, such as the temperature, the pressure, the atmosphere, etc. It will be appreciated that the coating process and the heat treatment process may be conducted in the same chamber 118 or in different chambers. Further, as described in greater detail below, in some embodiments, the reusable filler material 112 may be removed prior to the heat treatment process.

Referring back to FIG. 2, the method 200 optionally includes at block (214) removing the anchoring source. For example, in embodiments in which an anchoring source has not been applied, the anchoring source does not need to be removed; thus, block (214) of the method 200 is optional. However, in embodiments utilizing an anchoring source, the anchoring source may need to be removed to enable removal of the reusable filler material from the plurality of openings. For instance, where the anchoring source 114 is a magnet, the magnet or the magnetic force is removed such that the reusable filler material 112 is no longer held in place within the openings 104 by the magnetic force. In embodiments in which the anchoring source 114 is an adhesive material, the adhesive material may be physically removed (e.g., with the reusable filler material 112 stuck or held therein such that the reusable filler material 112 is removed along with the adhesive material) or may be chemically or thermally removed. For example, a chemical reaction or a temperature above a threshold temperature, e.g., under air or a specific atmosphere, can cause the adhesive material to decompose or breakdown and thereby remove the anchoring source 114. The threshold temperature can be above the first temperature, at which the coating process is conducted, e.g., to ensure the reusable filler material 112 is held in place during the coating process.

As shown at blocks (216) and (218) in FIG. 2, the method 200 includes removing the reusable filler material from the plurality of openings and collecting the reusable filler material. More particularly, the reusable filler material is removed from the plurality of openings such that the component, having the new coating applied thereto, can be passed along to the next stage, e.g., a further repair or assembly within a structure such as a gas turbine engine. FIG. 8 illustrates removal of the reusable filler material 112 from the component 100 and collection of the reusable filler material 112. The reusable filler material 112 may be removed from the plurality of openings 104 in any suitable manner, e.g., by blowing air from the internal cavity 108 through the openings 104 to dislodge the reusable filler material 112 therefrom, by agitating the component 100 to dislodge the reusable filler material 112 from the openings 104, by physically removing the reusable filler material 112 from the openings 104, etc. It will be appreciated that, to dislodge the reusable filler material 112 from the openings 104, the component 100 can be agitated in the same pattern or direction and/or at the same frequency as the component 100 may be agitated to self-assemble the reusable filler material 112 into the plurality of openings 104 as described above, or at least one of the pattern, direction, or frequency of agitation may be different compared to agitation of the component 100 to self-assemble the reusable filler material 112 into the plurality of openings 104.

In some embodiments, rather than removing after coating and heat treating, the reusable filler material 112 is removed from the plurality of openings 104 after the coating process is performed and before the heat treatment process is performed. That is, block (216) removing the reusable filler material is performed after block (210), conducting the coating process, and before block (212), conducting the heat treatment process. As such, the heat treatment process can be conducted after the reusable filler material 112 is removed. It will be appreciated that, in such embodiments, if the reusable filler material 112 is held in place with an anchoring source 114, the method also includes removing the anchoring source as shown at (214) after block (210) conducting the coating process and before block (216) removing the reusable filler material, which is likewise performed prior to block (212) conducting the heat treatment process.

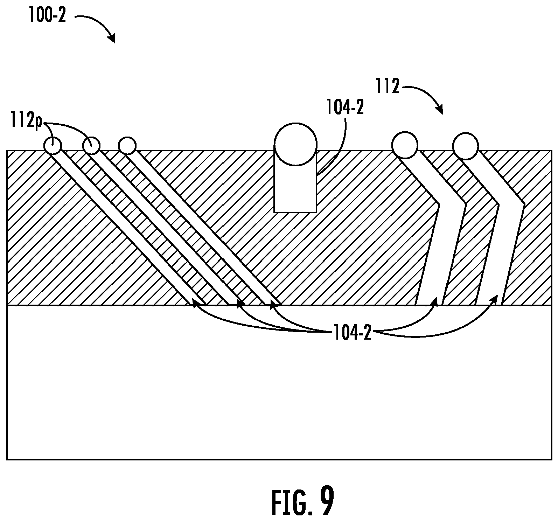

Notably, in the embodiment depicted in FIG. 9, the reusable filler material 112 is recovered after the coating 116 is applied to the component 100. In at least some embodiments, the reusable filler material is collected such that the reusable filler material can be reused with another coating process. For example, the reusable filler material 112 is collected such that the reusable filler material 112 can be used to block openings in a second component such that the second component can have a coating applied thereto. That is, the reusable filler material 112 is formed from a material that can withstand the coating process and, optionally, a heat treatment process, if a heat treatment process is conducted prior to removing the reusable filler material 112, such that the reusable filler material 112 can be reused to block openings in another coating process. As a non-exhaustive list of examples, the reusable filler material 112 can be formed from glass, a glass ceramic, a metal such as a ferrous material or a superalloy, a ceramic such as a sintered ceramic or an unsintered or green ceramic (including materials such as alumina, zirconia, silicon nitride, silicon carbide, or porcelain), or a polymer. The reusable filler material 112 may be formed from a material that can withstand temperatures of at least about 100°C, such as about 200°C, about 350°C, about 500°C, about 650°C, about 750°C, about 1000°C, about 1500°C, about 1750°C, or more.

As shown in FIG. 2, the method 200 optionally includes block (220) cleaning the reusable filler material. For example, after collecting the reusable filler material 112, the reusable filler material 112 can be cleaned using a suitable cleaning agent and/or cleaning process to remove any debris or other foreign material from the reusable filler material 112 that could, e.g., hinder the effectiveness of the reusable filler material 112 upon reuse. Further, after collecting the reusable filler material at block (218) and, optionally, cleaning the reusable filler material at block (220), the method 200 can be repeated. For instance, if the coating 116 applied to the component 100 is damaged, the method 200 can be repeated on the component 100 to remove the coating 116, block the plurality of openings 104 with the reusable filler material 112, apply a new coating, and then remove and collect the reusable filler material 112. Referring to FIG. 9, in another embodiment, the reusable filler material 112 may be used with a separate second component 100-2 to apply a coating to the second component 100-2. For example, the component 100 may be a first rotor blade of a first turbine stage a gas turbine engine, and the second component 100-2 may be a second rotor blade the first turbine stage of the gas turbine engine, such that the component 100 and the second component 100-2 are identical or substantially identical. However, in other embodiments, the component 100 and the second component 100-2 need not be substantially identical but may merely have similar openings defined therein such that the reusable filler material 112 can be used in each of the component 100 and the second component 100-2.

As shown in FIG. 9, the second component 100-2 has a plurality of openings 104-2, which may be the same as or similar to the plurality of openings 104 of the component 100. That is, the reusable filler material 112 may be of a suitable size and/or shape to sufficiently block the openings 104-2 of the second component 100-2 while a coating is applied to the second component 100-2. The reusable filler material 112 may be removed and collected from the second component, e.g., for reuse in a third, fourth, fifth, sixth, or more components to block a third plurality of openings, a fourth plurality of openings, etc.

It will be appreciated that, while described herein as a reusable filler material, the shape, materials, techniques for placing, etc. of the material that blocks the plurality of the openings of a component (such as the cooling holes of a gas turbine engine) could be applied to a non-reusable filler material. That is, a filler material configured as described herein could be a single use filler material. For example, the filler material could be a paste or other type of material that is burnt away, dissolved, or otherwise removed in a manner not suitable for reuse of the filler material. As another example, a relatively inexpensive filler material could be chosen, having a shape or form as described herein and/or placed in the openings of a component as described herein, that is discarded and not reused after removal from the openings following a coating process.

Accordingly, as described herein, the present subject matter provides methods of blocking openings in a component with a reusable filler material for a coating process, then removing the reusable filler material for use in another component. For example, the methods described herein describe reusable filler materials that block openings defined in a surface of a component such that the openings are substantially unobstructed after application of a coating over the surface and such that the reusable filler materials can be collected and reused after the coating is applied to the component. The reusable filler material allows savings in time and cost, e.g., by avoiding the labor intensive task of re-drilling numerous cooling holes or the like in gas turbine engine components and by reducing the amount of filler material required for multiple coating processes or multiple components because the reusable filler material can be used for more than one coating process. Other advantages of the subject matter described herein also may be realized by those of ordinary skill in the art.

Further aspects of the disclosure are provided by the subject matter of the following clauses:
A method of coating a gas turbine engine component comprising: blocking a plurality of openings defined in a surface of the gas turbine engine component with a reusable filler material; applying a coating to the surface of the gas turbine engine component; removing the reusable filler material from the plurality of openings; and collecting the reusable filler material.

A method of coating a gas turbine engine component, comprising blocking a plurality of openings defined through in a surface of a the gas turbine engine component with a reusable filler material; applying an anchoring source to the reusable filler material to hold the reusable filler material in the plurality of openings; applying a coating to the surface of the gas turbine engine component; removing the reusable filler material from the plurality of openings; and collecting the reusable filler material.

The method of any preceding clause, wherein applying the coating to the surface of the gas turbine engine component comprises conducting a coating process that is a line of sight deposition process.

The method of any preceding clause, wherein applying the coating to the surface of the gas turbine engine component comprises: conducting a coating process at a first temperature; and conducting a heat treatment process at a second temperature, wherein the second temperature is greater than the first temperature.

The method of any preceding clause, wherein the second temperature is at least about 300°C.

The method of any preceding clause, wherein the anchoring source is a magnet and the reusable filler material is a magnetic material.

The method of any preceding clause, wherein the anchoring source is a vacuum suction device.

The method of any preceding clause, wherein the anchoring source is an adhesive material.

The method of any preceding clause, wherein the anchoring source is two or more of a magnet, a vacuum suction device, or an adhesive material.

The method of any preceding clause, wherein the reusable filler material comprises a plurality of pieces, and wherein at least one piece of the plurality of pieces of the reusable filler material has an elongated wire shape with a shaped head.

The method of any preceding clause, wherein blocking the plurality of openings with the reusable filler material comprises agitating at least one of the gas turbine engine component or the reusable filler material to self-assemble the reusable filler material in the plurality of openings.

The method of any preceding clause, wherein the reusable filler material comprises a plurality of pieces, wherein at least one piece of the plurality of pieces of the reusable filler material has a shape complementary to a shape of at least one of the plurality of openings.

The method of any preceding clause, wherein the reusable filler material comprises a plurality of pieces, and wherein at least one piece of the plurality of pieces of the reusable filler material has a spherical shape, a conical shape, or an elongated wire shape.

The method of any preceding clause, wherein the gas turbine engine component is an airfoil and the plurality of openings are a plurality of cooling holes defined in the airfoil.

The method of any preceding clause, further comprising, after collecting the reusable filler material: blocking a second plurality of openings defined in a surface of a second gas turbine engine component with the reusable filler material; applying a coating to the surface of the second gas turbine engine component; removing the reusable filler material from the second plurality of openings; and collecting the reusable filler material.

A method of coating a gas turbine engine component comprising: blocking a plurality of openings defined in a surface of the gas turbine engine component with a reusable filler material, where an anchoring source holds the reusable filler material in the plurality of openings; conducting a coating process to apply a coating to the surface of the gas turbine engine component, the coating process comprising a line of sight deposition process; removing the anchoring source; removing the reusable filler material from the plurality of openings; and collecting the reusable filler material.

The method of any preceding clause, wherein the anchoring source is at least one of a magnet, a vacuum suction device, or an adhesive material.

The method of any preceding clause, wherein the reusable filler material comprises a plurality of pieces, and wherein blocking the plurality of openings comprises: disposing the plurality of pieces with the gas turbine engine component; and agitating at least one of the plurality of pieces or the gas turbine engine component such that the plurality of pieces self-assemble in the plurality of openings to block the plurality of openings with the reusable filler material.

The method of any preceding clause, wherein the reusable filler material extends beyond the plurality of openings and the surface of the gas turbine engine component such that the coating is discontinuous at the plurality of openings.

The method of any preceding clause, further comprising, after collecting the reusable filler material, cleaning the reusable filler material.

The method of any preceding clause, wherein the gas turbine engine component is a ceramic matrix composite (CMC) component and the coating is an environmental barrier coating (EBC).

This written description uses examples to disclose embodiments of the disclosure, including the best mode, and also to enable any person skilled in the art to practice the disclosure, including making and using any devices or systems and performing any incorporated methods. The patentable scope of the disclosure is defined by the claims and may include other examples that occur to those skilled in the art. Such other examples are intended to be within the scope of the claims if they include structural elements that do not differ from the literal language of the claims or if they include equivalent structural elements with insubstantial differences from the literal language of the claims.

## Claims

1. A method (200) of coating a gas turbine engine component, comprising:
blocking (204) a plurality of openings (104) defined in a surface (106) of the gas turbine engine component (100) with a reusable filler material (112);
applying (206) an anchoring source (114) to the reusable filler material to hold the reusable filler material in the plurality of openings;
applying (208) a coating (116) to the surface of the gas turbine engine component;
removing (216) the reusable filler material from the plurality of openings; and
collecting (218) the reusable filler material.

2. The method of claim 1, wherein applying (208) the coating (116) to the surface (106) of the gas turbine engine component (100) comprises subjecting the gas turbine engine component and the reusable filler material to a temperature of at least about 300°C.

3. The method of any preceding claim, wherein applying (208) the coating (116) to the surface (106) of the gas turbine engine component (100) comprises:
conducting (210) a coating process at a first temperature; and
conducting (212) a heat treatment process at a second temperature,
wherein the second temperature is greater than the first temperature.

4. The method of claim 3, wherein the first temperature is at least about 300°C and the second temperature is at least about 1000°C.

5. The method of any preceding claim, wherein the anchoring source (114) is a magnet and the reusable filler material (112) is a magnetic material.

6. The method of any of claims 1 to 4, wherein the anchoring source (114) is a vacuum suction device.

7. The method of any of claims 1 to 4, wherein the anchoring source (114) is an adhesive material.

8. The method of any preceding claim, wherein the anchoring source (114) is two or more of a magnet, a vacuum suction device, or an adhesive material.

9. The method of any preceding claim, wherein the reusable filler material (112) comprises a plurality of pieces (112p), and wherein at least one piece of the plurality of pieces of the reusable filler material has an elongated wire shape with a shaped head.

10. The method of any preceding claim, wherein blocking (204) the plurality of openings (104) with the reusable filler material (112) comprises agitating at least one of the gas turbine engine component (100) or the reusable filler material (112) to self-assemble the reusable filler material in the plurality of openings.

11. The method of any of preceding claim, wherein the reusable filler material (112) comprises a plurality of pieces (112p), and wherein at least one piece of the plurality of pieces of the reusable filler material has a shape complementary to a shape of at least one of the plurality of openings.

12. The method of any preceding claim, wherein the reusable filler material (112) comprises a plurality of pieces (112p), and wherein at least one piece of the plurality of pieces of the reusable filler material has a spherical shape, a conical shape, or an elongated wire shape.

13. The method of any preceding claim, wherein the gas turbine engine component (100) is an airfoil and the plurality of openings (104) are a plurality of cooling holes defined in the airfoil.

14. The method of any preceding claim, further comprising, after collecting (218) the reusable filler material (112):
blocking (204) a second plurality of openings (104-2) defined in a surface of a second gas turbine engine component (100-2) with the reusable filler material (112);
applying (208) a coating to the surface of the second gas turbine engine component;
removing (216) the reusable filler material from the second plurality of openings; and
collecting (218) the reusable filler material.
